# FASCICULE DE BREVET EUROPEEN

(11) **EP 3 316 049 B1**
(45) Date de publication et mention de la délivrance du brevet: **27.11.2019**
(21) Numéro de dépôt: 16195648.7
(22) Date de dépôt: 26.10.2016
(51) Int. Cl.: G04D 1/10

(54) **BANC DE DEMONTAGE POUR MONTRE A FERMETURE SECURISEE**
DEMONTAGESTAND FÜR EINE ARMBANDUHR MIT GESICHERTEM VERSCHLUSS
DISASSEMBLY BENCH FOR WATCH WITH SECURE CLOSING

(43) Date de publication de la demande: 02.05.2018
(73) Titulaire: The Swatch Group Research and Development Ltd, 2074 Marin (CH)
(72) Inventeur: VUILLE, Pierry, 2338 Les Emibois (CH)
(74) Mandataire: Giraud, Eric

(56) Documents cités:
- CH-A- 271 169
- US-A- 3 145 459
- "WATERPROOF WATCHES NEW CASE OPENER FOR", HOROLOGICAL JOURNAL,, vol. 112, 1 mars 1970 (1970-03-01), page 6, XP001444135,

## Description

### Domaine de l'invention

L'invention concerne un banc de démontage pour le déverrouillage et le désassemblage d'un premier composant et d'un deuxième composant d'une montre à fermeture sécurisée comportant au moins deux pênes pour immobiliser dans une position verrouillée ledit premier composant et ledit deuxième composant.

L'invention concerne encore un ensemble horloger comportant un tel banc de démontage et une telle montre à fermeture sécurisée.

L'invention concerne le domaine des montres de haute qualité, telles des montres de plongée, ou des montres à complications, qui ne doivent pas être ouvertes par des mains inexpertes, afin d'éviter toute pollution, toute rupture d'étanchéité, ou encore toute dégradation ou tout déréglage. L'invention concerne plus particulièrement l'habillage de telles montres, et les liaisons entre boîte et fond, et similaires.

### Arrière-plan de l'invention

Des montres de plongée ou à complications ne doivent pas pouvoir être ouvertes par quiconque, en raison de contraintes particulières d'étanchéité, de propreté, de lubrification, ou encore de réglage. Certaines montres nécessitent un retour en usine pour des interventions internes, de façon à garantir à l'utilisateur le maintien de toutes leurs performances, et leur aspect esthétique irréprochable. Il est donc utile de prévoir en usine, ou en SAV agréé, la présence de dispositifs permettant l'ouverture de montres à fermeture sécurisée, qui sont conçues pour être inviolables par tout horloger ne disposant pas de l'outillage approprié, et a fortiori pour tout utilisateur.

La conception d'une montre inviolable en l'absence d'un outillage particulier ne doit pas compliquer outre mesure la fabrication de cette montre, dont les opérations d'assemblage doivent rester les plus classiques possible.

La demande US3145459 divulgue un banc de démontage pour le déverrouillage et le désassemblage d'un premier composant et d'un deuxième composant d'une montre (fond de boîte de montre ou glace à désassembler de la boîte), ledit banc de démontage comportant des moyens de manœuvre pour imprimer un mouvement relatif de démontage entre ledit premier composant et ledit deuxième composant, et comportant des moyens pour l'application simultanée d'une force pour chasser dans une position de libre passage plusieurs pênes agencés au préalable dans ladite montre pour immobiliser dans une position verrouillée ledit premier composant et ledit deuxième composant, l'action desdits moyens de manœuvre n'étant possible que quand la totalité desdits pênes sont dans ladite position de libre passage. Ce document ne présente pas de moyens permettant de mobiliser les pênes sans contact.

### Résumé de l'invention

L'invention se propose de mettre à la disposition du fabricant de montres un outillage qui lui permette le démontage de montres à fermeture sécurisée, conçues spécialement pour empêcher tout démontage intempestif. L'invention propose également des agencements de montres conçues dans ce but.

A cet effet, l'invention concerne un banc de démontage pour le déverrouillage et le désassemblage d'un premier composant et d'un deuxième composant d'une montre à fermeture sécurisée, selon la revendication 1.

L'invention concerne encore un ensemble horloger comportant un tel banc de démontage et une telle montre à fermeture sécurisée.

### Description sommaire des dessins

D'autres caractéristiques et avantages de l'invention apparaîtront à la lecture de la description détaillée qui va suivre, en référence aux dessins annexés, où :

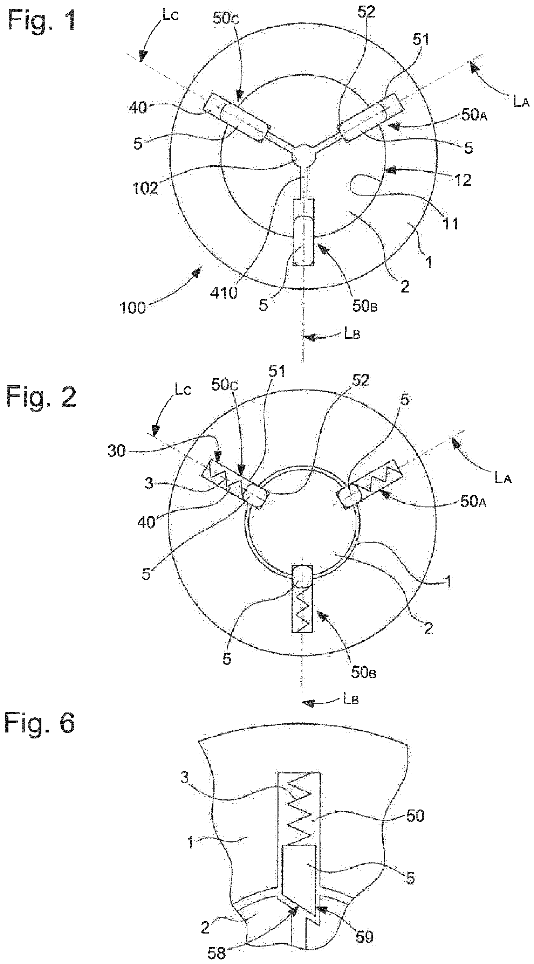

- la figure 1 représente, de façon schématisée, et en vue en plan, un premier composant externe et un deuxième composant interne d'une montre, assemblés l'un à l'autre, et qui comportent chacun des logements, qui, dans la position indexée d'assemblage, sont alignés pour délimiter des chambres, dans lesquelles sont mobiles des pênes. Sur cette figure, les pênes sont entièrement libres, chacun dans sa chambre, et soumis seulement à la gravité, la montre étant représentée verrouillée dans une position verticale, où le pêne le plus bas sur la figure repose sur le composant externe, alors que les deux autres reposent sur le composant interne; les extrémités des chambres du côté de ce composant interne sont reliées par des canaux à une entrée centrale pour l'insertion ou l'extraction d'un fluide ;
- la figure 2 représente, de façon similaire à la figure 1, une autre montre, où chaque chambre renferme un pêne ici constitué par une bille, repoussée hors du composant externe par un ressort. Dans cette variante les chambres ne communiquent pas avec l'extérieur, et seule la force centrifuge peut modifier la position de toutes les billes, au contraire d'un choc, qui peut modifier la position d'une partie seulement des billes. Cette figure illustre la position verrouillée, où chaque bille empêche toute rotation relative entre le composant interne et le composant externe ;

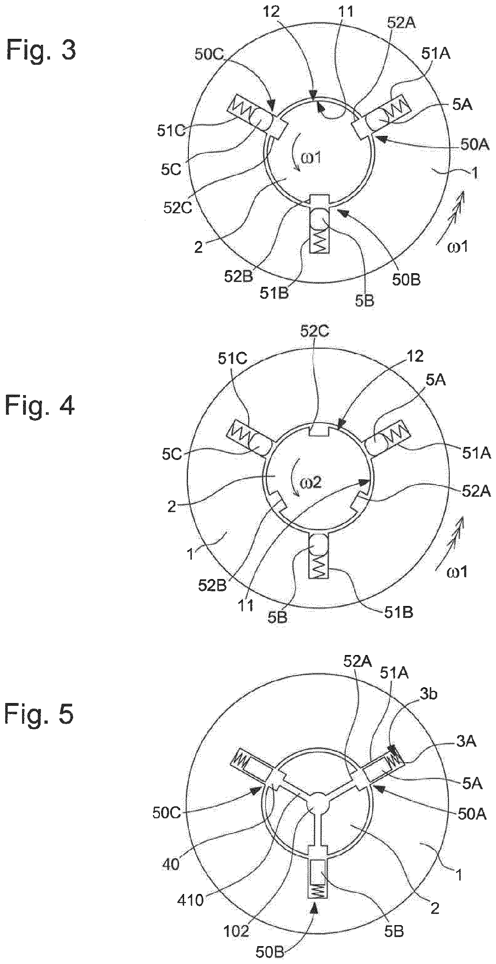

- la figure 3 représente le mécanisme de la figure 2 lors d'une rotation synchrone du composant interne et du composant externe, lors de laquelle les billes s'éloignent du centre sous l'effet de la force centrifuge, et autorisent une rotation relative entre les deux composants ;
- la figure 4 représente le mécanisme de la figure 2 lors d'une rotation différentielle, après l'étape de rotation synchrone de la figure 3, cette rotation différentielle autorisant une rotation relative entre les deux composants et leur démontage ;
- la figure 5 représente, de façon similaire à la figure 1, une autre montre encore, où chaque chambre renferme un pêne, repoussé hors du composant externe par un ressort. Les extrémités des chambres du côté du composant interne sont reliées par des canaux à une entrée centrale pour l'insertion ou l'extraction d'un fluide ;
- la figure 6 représente, de façon similaire à la figure 1, un détail d'une autre montre encore, où le pêne n'a pas de degré de liberté en rotation, et de façon analogue au pêne d'une serrure de porte usuelle, autorise une rotation relative entre les deux composants dans un sens, et s'y oppose dans l'autre ;

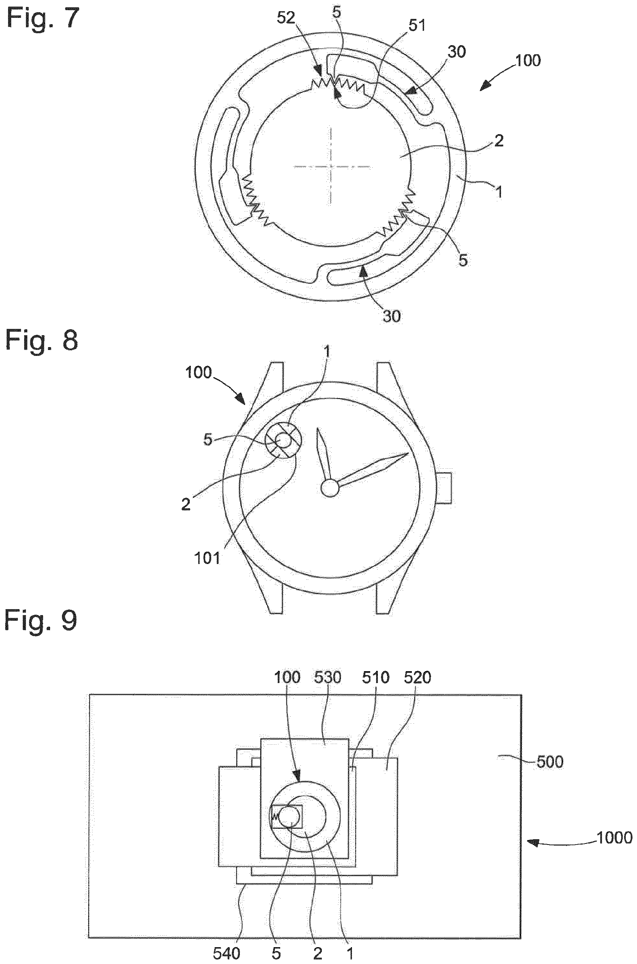

- la figure 7 représente, de façon similaire à la figure 1, une autre montre encore, comportant trois pênes élastiques à 120° l'un de l'autre, chacun comportant une masselotte porteuse d'une dent, et relié par un bras élastique au premier composant externe, dont une surface intérieure forme une surface de butée de centrifugation, et le deuxième composant interne comportant des séries de crans agencés pour recevoir les dents des pênes ;
- la figure 8 représente, de façon schématisée, et en vue en plan, une montre selon l'une de ces variantes, comportant un guichet par lequel l'utilisateur peut voir le pêne si celui-ci est dans la position de verrouillage ;
- la figure 9 est une représentation schématique d'un ensemble comportant, d'une part un banc de démontage qui comporte des moyens de manœuvre, des moyens de centrifugation, et des moyens pneumatiques ou hydrauliques, et d'autre part une montre à fermeture sécurisée soumise à l'action de tout ou partie de ces différents moyens.

### Description détaillée des modes de réalisation préférés

L'invention est décrite, de façon nullement limitative, pour la sécurisation de la liaison carrure-fond d'une montre. Elle est naturellement applicable, sous réserve de disposer de l'espace nécessaire aux éléments de sécurité, qu'on appelle ci-après des pênes, à d'autres composants d'une montre.

L'invention concerne un banc de démontage 500 pour le déverrouillage et le désassemblage d'un premier composant 1 et d'un deuxième composant 2 d'une montre 100 à fermeture sécurisée.

Selon l'invention, ce banc de démontage 500 comporte des moyens de manœuvre 530 agencés pour imprimer un mouvement relatif de démontage entre le premier composant 1 et le deuxième composant 2.

Ce banc 500 comporte encore des moyens de centrifugation 510 et/ou des moyens pneumatiques ou hydrauliques 520, pour l'application simultanée d'une force centrifuge et/ou d'une surpression ou d'une dépression à une telle montre 100, pour chasser dans une position de libre passage un ou plusieurs pênes 5. Chacun de ces pênes a été agencé au préalable dans cette montre 100 pour immobiliser dans une position verrouillée le premier composant 1 et le deuxième composant 2 : le pêne 5 est mobile entre sa position de verrouillage et sa position de libre passage, et seul le banc 500 selon l'invention lui permet de quitter sa position de verrouillage pour rejoindre sa position de libre passage. On comprend que l'action des moyens de manœuvre 530 n'est possible que quand la totalité des pênes 5 sont dans la position de libre passage. Dans une variante particulière, cette position de libre passage est une position instable, c'est notamment le cas quand le pêne 5 est soumis à l'action de moyens de rappel élastique 30, notamment d'un ressort.

On comprend que l'action sur les moyens de manœuvre 530 se fait pendant l'application des moyens particuliers du banc 500, notamment pendant la centrifugation, et que ces moyens de manœuvre 530 sont inefficients si la totalité des pênes 5 n'est pas libérée.

Naturellement, si ce banc 500 est ici dénommé banc de démontage, c'est en raison de son aptitude à vaincre le verrouillage sécurisé. Mais on remarque que certaines de ses fonctionnalités le rendent aussi apte à exercer certaines fonctions d'assemblage, par exemple si on veut, au stade du montage initial, loger certains composants comme des pênes dans des cavités inaccessibles par d'autres moyens.

Selon le type de montre à démonter, le banc 500 peut être simplifié, ne comporte pas nécessairement la totalité des moyens cités : moyens de manœuvre, moyens de centrifugation, moyens pneumatiques ou hydrauliques.

L'invention concerne encore un ensemble horloger 1000 comportant un tel banc de démontage 500, et au moins une montre 100 à fermeture sécurisée.

Cette montre 100 à fermeture sécurisée comporte un premier composant 1 et un deuxième composant 2, qui sont agencés pour être assemblés l'un avec l'autre, de façon complémentaire au travers respectivement d'une première surface 11 et d'une deuxième surface 12, et pour être indexés en position d'assemblage par au moins une paire 50 comportant des premiers moyens d'indexage 51 au niveau du premier composant 1 et des deuxièmes moyens d'indexage 52 au niveau du deuxième composant 2. Ces premiers moyens d'indexage 51 et deuxièmes moyens d'indexage 52 sont complémentaires les uns avec les autres ou, comme sur les réalisations illustrées, non limitatives, avec un tel pêne 5 au sein de chaque dite paire 50.

Les figures illustrent trois paires 50A, 50B, 50C, pour chacune des montres illustrées

Les premiers moyens d'indexage 51 et deuxièmes moyens d'indexage 52 de chaque paire 50 sont alignés deux à deux dans la position d'assemblage, pour définir une chambre 40 dans laquelle est mobile un pêne 5, entre une position de libre passage et une position de verrouillage dans laquelle ce pêne 5 est agencé pour verrouiller le premier composant 1 et le deuxième composant 2 dans une position assemblée et verrouillée.

Selon l'invention, dans cette position assemblée et verrouillée des premier composant 1 et deuxième composant 2, et dans au moins une telle paire 50, les premiers moyens d'indexage 51 et les deuxièmes moyens d'indexage 52 et ledit pêne 5 sont inaccessibles à tout outil.

Et les moyens de centrifugation 510 et/ou moyens pneumatiques ou hydrauliques 520 du banc 500 sont agencés pour l'application simultanée, à chaque chambre 40, d'une force centrifuge et/ou d'une surpression ou d'une dépression. Seule cette application simultanée permet le mouvement simultané des pênes 5, qui seul autorise le déplacement relatif des premier composant 1 et deuxième composant 2

Et seule l'application simultanée, à chaque paire 50 que comporte la montre 100, d'une force centrifuge par ces moyens de centrifugation 510 et/ou d'une variation de pression par ces moyens pneumatiques ou hydrauliques 520, commande un mouvement de dégagement de chaque pêne 5 dans chaque paire 50 que comporte la montre 100 pour permettre le déverrouillage des premier composant 1 et deuxième composant 2, et pour autoriser un mouvement relatif entre le premier composant 1 et le deuxième composant 2 sous l'action des moyens de manœuvre 530, lesquels comportent par exemple des moyens de maintien de l'un des composants, et des moyens de vissage ou de dévissage de l'autre composant.

Plus particulièrement, la montre 100 comporte une pluralité de telles chambres 40, dans chacune desquelles le pêne 5 est mobile selon une direction L curviligne ou linéaire selon laquelle s'étend cette chambre 40.

De préférence, au moins deux de ces chambres 40 ont des directions L non parallèles.

Plus particulièrement, les directions L sont linéaires comme sur les variantes des figures. Mais rien n'interdit des directions curvilignes, avec notamment des chambres en épingle à cheveux, dans lesquelles un pêne 5 tel qu'une bille peut passer d'une branche à l'autre dans des manipulations complexes, nécessitant des moyens de pilotage informatisés des différents moyens que comporte le banc 500.

Plus particulièrement, et tel que visible sur les figures 2 à 7, au moins un pêne 5 est maintenu dans sa position de verrouillage du premier composant 1 et du deuxième composant 2 par des moyens de rappel élastique 30, et le banc de démontage 500 est agencé pour appliquer à ce pêne 5 une force centrifuge et/ou une variation de pression et lui appliquer un effort suffisant pour vaincre l'effort de rappel de ces moyens de rappel élastique 30, et pour assurer le déplacement du pêne 5 dans sa chambre 40 vers sa position de libre passage pour assurer le déverrouillage.

Plus particulièrement encore, dans une variante non illustrée par les figures, au moins un dit pêne 5 est maintenu dans sa position de verrouillage du premier composant 1 et du deuxième composant 2 par des moyens d'attraction ou de répulsion magnétique 60.

Et le banc de démontage 500 comporte alors des moyens magnétiques 540, agencés pour, lors de l'application d'une force centrifuge ou d'une variation de pression pour le déverrouillage, appliquer à un ou plusieurs pênes 5, un champ magnétique à l'encontre de ces moyens d'attraction ou de répulsion magnétique 60 que comporte une montre 100 pour repousser ou attirer les pênes 5.

Plus particulièrement, les premiers moyens d'indexage 51 et/ou deuxièmes moyens d'indexage 52 sont amagnétiques.

Plus particulièrement, les premiers moyens d'indexage 51 et/ou deuxièmes moyens d'indexage 52 sont conducteurs électrostatiques.

Plus particulièrement, les première surface 11 et deuxième surface 12 sont des surfaces de contact agencées pour coopérer l'une avec l'autre selon un assemblage en baïonnette.

Plus particulièrement, tel que visible sur la figure 8, la montre 100 comporte au moins un guichet 101 agencé pour visualiser la position d'un pêne 5 dans la position assemblée et verrouillée des premier composant 1 et deuxième composant 2. Plus particulièrement encore, la montre 100 comporte au moins un guichet 101 agencé pour visualiser la position de chaque pêne 5 dans cette position assemblée et verrouillée.

Dans une variante illustrée à la figure 6, les premier composant 1 et deuxième composant 2 sont agencés pour être vissés l'un sur l'autre lors de leur assemblage, et au moins un pêne 5 est libre seulement en translation dans sa chambre 40, et comporte d'un premier côté une pente 58 oblique ou courbe agencée pour autoriser le franchissement du pêne 5 par glissement lors du vissage, et, d'un deuxième côté un front 59 agencé pour interdire le passage du pêne 5 lors du dévissage, quand le pêne 5 coopère à la fois avec les premiers moyens d'indexage 51 et les deuxièmes moyens d'indexage 52.

Dans une variante particulière, la montre 100 comporte une entrée 102 pour l'insertion ou l'extraction d'un fluide par un canal 410 dans ou hors chaque chambre 40 que comporte la montre 100.

Dans une variante particulière non illustrée, la montre 100 comporte au moins une valve hélium pour l'évacuation du fluide en cas de surpression au-dessus d'une valeur de sécurité.

Dans une variante de construction, les premiers moyens d'indexage 51 ou les deuxièmes moyens d'indexage 52, qui forment une partie d'une chambre 40, sont prolongés par un canal agencé pour l'introduction initiale du pêne 5 lors de la fabrication de la montre 100, notamment sous l'action de l'application d'une force centrifuge ou d'une variation de pression par le banc de démontage 500, et ce canal est ensuite obturé par un bouchon lee-plug ou similaire, tel qu'utilisé en hydraulique aéronautique à haute pression, pour enfermer le pêne 5 et garantir l'étanchéité à grande profondeur.

Naturellement ces différentes variantes de construction sont compatibles avec l'agencement usuel des joints d'étanchéité, tout particulièrement pour des montres de plongée. Elles sont aussi compatibles avec l'emploi d'éléments élastiques, notamment à mémoire de forme, pour assurer un serrage croissant lors de l'assemblage du premier avec le deuxième composant.

## Revendications

1. Banc de démontage (500) pour le déverrouillage et le désassemblage d'un premier composant (1) et d'un deuxième composant (2) d'une montre (100) à fermeture sécurisée comportant au moins deux pênes (5) pour immobiliser dans une position verrouillée ledit premier composant (1) et ledit deuxième composant (2), ledit banc de démontage (500) comportant des moyens de manœuvre (530) pour imprimer un mouvement relatif de démontage entre ledit premier composant (1) et ledit deuxième composant (2), **caractérisé en ce que** ledit banc de démontage (500) comporte des moyens de centrifugation (510) et/ou des moyens pneumatiques ou hydrauliques (520), pour l'application simultanée, à tous les dits pênes (5), d'une force centrifuge et/ou d'une surpression ou d'une dépression à une telle montre (100), pour chasser dans une position de libre passage tous les dits pênes (5), l'action desdits moyens de manœuvre (530) n'étant possible que quand la totalité desdits pênes (5) sont dans ladite position de libre passage.

2. Banc de démontage (500) selon la revendication 1, **caractérisé en ce que** ledit banc de démontage (500) comporte des moyens magnétiques (540), agencés pour appliquer à un ou plusieurs dits pênes (5), un champ magnétique à l'encontre des moyens d'attraction ou de répulsion magnétique que comporte une dite montre (100) pour repousser ou attirer lesdits pênes (5).

3. Ensemble horloger (1000) comportant un banc de démontage (500) selon la revendication 1 ou 2, et au moins une montre (100) à fermeture sécurisée laquelle comporte un premier composant (1) et un deuxième composant (2) agencés pour être assemblés l'un avec l'autre, de façon complémentaire au travers respectivement d'une première surface (11) et d'une deuxième surface (12), et indexés en position d'assemblage par au moins deux paires (50) comportant des premiers moyens d'indexage (51) au niveau dudit premier composant (1) et des deuxièmes moyens d'indexage (52) au niveau dudit deuxième composant (2), complémentaires les uns avec les autres ou avec un dit pêne (5) au sein de chaque dite paire (50), et lesdits premiers moyens d'indexage (51) et deuxièmes moyens d'indexage (52) de chaque dite paire (50) étant alignés deux à deux dans ladite position d'assemblage pour définir une chambre (40) dans laquelle est mobile un dit pêne (5) entre une dite position de libre passage et une position de verrouillage dans laquelle ledit pêne (5) est agencé pour verrouiller ledit premier composant (1) et ledit deuxième composant (2) dans une position assemblée et verrouillée, **caractérisé en ce que**, dans ladite position assemblée et verrouillée desdits premier composant (1) et deuxième composant (2), et dans au moins une dite paire (50) lesdits premiers moyens d'indexage (51) et lesdits deuxièmes moyens d'indexage (52) et ledit pêne (5) sont inaccessibles à tout outil, **en ce que** lesdits moyens de centrifugation (510) et/ou moyens pneumatiques ou hydrauliques (520) sont agencés pour l'application simultanée, à chaque dite chambre (40), d'une force centrifuge et/ou d'une surpression ou d'une dépression, et **en ce que** seule l'application simultanée, à chaque dite paire (50) que comporte ladite montre (100), d'une force centrifuge par lesdits moyens de centrifugation (510) et/ou d'une variation de pression par lesdits moyens pneumatiques ou hydrauliques (520), commande un mouvement de dégagement de chaque dit pêne (5) dans chaque dite paire (50) que comporte ladite montre (100) pour permettre le déverrouillage desdits premier composant (1) et deuxième composant (2), et pour autoriser un mouvement relatif entre ledit premier composant (1) et ledit deuxième composant (2) sous l'action desdits moyens de manœuvre (530).

4. Ensemble horloger (1000) selon la revendication 3, **caractérisé en ce que** ladite montre (100) comporte une pluralité de dites chambres (40) dans chacune lesquelles ledit pêne (5) est mobile selon une direction (L) curviligne ou linéaire selon laquelle s'étend ladite chambre (40).

5. Ensemble horloger (1000) selon la revendication 4, **caractérisé en ce que** au moins deux dites chambres (40) ont des directions (L) non parallèles.

6. Ensemble horloger (1000) selon l'une des revendications 3 à 5, **caractérisé en ce que** au moins un dit pêne (5) est maintenu dans sa position de verrouillage dudit premier composant (1) et dudit deuxième composant (2) par des moyens de rappel élastique (30), et **en ce que** ledit banc de démontage (500) est agencé pour appliquer audit pêne (5) une force centrifuge et/ou une variation de pression et lui appliquer un effort suffisant pour vaincre l'effort de rappel desdits moyens de rappel élastique (30) et pour assurer le déplacement dudit pêne (5) dans sa dite chambre (40) pour le déverrouillage.

7. Ensemble horloger (1000) selon l'une des revendications 3 à 6, **caractérisé en ce que** au moins un dit pêne (5) est maintenu dans sa position de verrouillage dudit premier composant (1) et dudit deuxième composant (2) par des moyens d'attraction ou de répulsion magnétique (60), et **en ce que** ledit banc de démontage (500) comporte des moyens magnétiques (540), et est agencé pour appliquer audit pêne (5), lors de ladite application d'une force centrifuge ou d'une variation de pression par ledit banc de démontage (500) pour le déverrouillage, l'application d'un champ magnétique par lesdits moyens magnétiques (540) à l'encontre desdits moyens d'attraction ou de répulsion magnétique (60).

8. Ensemble horloger (1000) selon l'une des revendications 3 à 7, **caractérisé en ce que** lesdits premiers moyens d'indexage (51) et/ou deuxièmes moyens d'indexage (52) sont amagnétiques.

9. Ensemble horloger (1000) selon l'une des revendications 3 à 8, **caractérisé en ce que** lesdits premiers moyens d'indexage (51) et/ou deuxièmes moyens d'indexage (52) sont conducteurs électrostatiques.

10. Ensemble horloger (1000) selon l'une des revendications 3 à 9, **caractérisé en ce que** lesdites première surface (11) et deuxième surface (12) sont des surfaces de contact agencées pour coopérer l'une avec l'autre selon un assemblage en baïonnette.

11. Ensemble horloger (1000) selon l'une des revendications 3 à 10, **caractérisé en ce que** ladite montre (100) comporte au moins un guichet (101) agencé pour visualiser la position d'un dit pêne (5) dans ladite position assemblée et verrouillée desdits premier composant (1) et deuxième composant (2).

12. Ensemble horloger (1000) selon la revendication 11, **caractérisé en ce que** ladite montre (100) comporte au moins un guichet (101) agencé pour visualiser la position de chaque dit pêne (5) dans ladite position assemblée et verrouillée desdits premier composant (1) et deuxième composant (2).

13. Ensemble horloger (1000) selon l'une des revendications 3 à 12, **caractérisé en ce que** lesdits premier composant (1) et deuxième composant (2) sont agencés pour être vissés l'un sur l'autre lors de leur assemblage, et **en ce qu'**au moins un dit pêne (5) est libre seulement en translation dans sa dite chambre, et comporte d'un premier côté une pente oblique ou courbe agencée pour autoriser le franchissement dudit pêne (5) par glissement lors du vissage, et, d'un deuxième côté un front agencé pour interdire le passage dudit pêne (5) lors du dévissage quand ledit pêne (5) coopère à la fois avec lesdits premiers moyens d'indexage (51) et lesdits deuxièmes moyens d'indexage (52).

14. Ensemble horloger (1000) selon l'une des revendications 3 à 13, **caractérisé en ce que** ladite montre (100) comporte une entrée (102) pour l'insertion ou l'extraction d'un fluide par un canal (410) dans ou hors chaque dite chambre (40) que comporte ladite montre (100).

15. Ensemble horloger (1000) selon la revendication 14, **caractérisé en ce que** ladite montre (100) comporte au moins une valve hélium pour l'évacuation dudit fluide en cas de surpression au-dessus d'une valeur de sécurité.

## Patentansprüche

1. Demontagestand (500) zum Entriegeln und Demontieren einer ersten Komponente (1) und einer zweiten Komponente (2) einer tragbaren Uhr (100) mit sicherem Schließzustand, umfassend mindestens zwei Rasten (5), um die erste Komponente (1) und die zweite Komponente (2) in einer Verriegelungsposition festzusetzen, wobei der Demontagestand (500) Betätigungsmittel (530) umfasst, um eine relative Demontagebewegung zwischen der ersten Komponente (1) und der zweiten Komponente (2) zu bewirken, **dadurch gekennzeichnet, dass** der Demontagestand (500) Zentrifugationsmittel (510) und/oder pneumatische oder hydraulische Mittel (520) zum gleichzeitigen Ausüben einer Zentrifugalkraft und/oder eines Überdrucks oder eines Unterdrucks auf alle Rasten (5) bei einer solchen tragbaren Uhr (100) umfasst, um alle genannten Rasten (5) in eine Freilaufposition zu bringen, wobei die Wirkung der Betätigungsmittel (530) nur möglich ist, wenn sich sämtliche Rasten (5) in der Freilaufposition befinden.

2. Demontagestand (500) nach Anspruch 1, **dadurch gekennzeichnet, dass** der Demontagestand (500) magnetische Mittel (540) umfasst, die so angeordnet sind, dass sie eine oder mehrere Rasten (5) mit einem Magnetfeld beaufschlagen, das magnetischen Anziehungs- oder Abstoßungsmitteln, die eine Uhr (100) aufweist, um die Rasten (5) abzustoßen oder anzuziehen, entgegenwirkt.

3. Uhrmacher-Anordnung (1000), umfassend einen Demontagestand (500) nach Anspruch 1 oder 2 und mindestens eine tragbare Uhr (100) mit sicherem Schließzustand, die eine erste Komponente (1) und eine zweite Komponente (2) umfasst, die so angeordnet sind, dass sie auf komplementäre Weise mittels einer ersten Fläche (11) bzw. einer zweiten Fläche (12) zusammengefügt werden, und in der Verbindungsposition durch mindestens zwei Paare (50) indexiert sind, die erste Indexierungsmittel (51) bezogen auf die erste Komponente (1) und zweite Indexierungsmittel (52) bezogen auf die zweite Komponente (2) aufweisen, die zueinander oder zu einer Raste (5) in jedem Paar (50) komplementär sind, wobei die ersten Indexierungsmittel (51) und die zweiten Indexierungsmittel (52) jedes Paars (50) in der Verbindungsposition paarweise aufeinander ausgerichtet sind, um eine Kammer (40) zu definieren, in der eine Raste (5) zwischen einer Freilaufposition und einer Verriegelungsposition beweglich ist, in der die Raste (5) zum Verriegeln der ersten Komponente (1) und der zweiten Komponente (2) in einer zusammengefügten und verriegelten Position angeordnet ist, **dadurch gekennzeichnet, dass** in der zusammengefügten und verriegelten Position der ersten Komponente (1) und der zweiten Komponente (2) und in mindestens einem genannten Paar (50) die ersten Indexierungsmittel (51) und die zweiten Indexierungsmittel (52) sowie die Raste (5) für jegliches Werkzeug unzugänglich sind, dass die Zentrifugationsmittel (510) und/oder die pneumatischen oder hydraulischen Mittel (520) zum Ausüben einer Zentrifugalkraft und/oder eines Überdrucks oder eines Unterdrucks gleichzeitig auf jede Kammer (40) angeordnet sind, und dass nur das gleichzeitige Ausüben einer Zentrifugalkraft durch die Zentrifugationsmittel (510) und/oder einer Druckänderung durch die pneumatischen oder hydraulischen Mittel (520) auf jedes Paar (50), das die Uhr (100) aufweist, eine Ausrückbewegung jeder Raste (5) in jedem Paar (50), das die tragbare Uhr (100) aufweist, steuert, um das Entriegeln der ersten Komponente (1) und der zweiten Komponente (2) zu ermöglichen und um eine relative Bewegung zwischen der ersten Komponente (1) und der zweiten Komponente (2) unter der Wirkung der Betätigungsmittel (530) zuzulassen.

4. Uhrmacher-Anordnung (1000) nach Anspruch 3, **dadurch gekennzeichnet, dass** die tragbare Uhr (100) mehrere Kammern (40) aufweist, in denen jeweils die Raste (5) in einer kurvenförmigen oder linearen Richtung (L), längs derer sich die Kammer (40) erstreckt, beweglich ist.

5. Uhrmacher-Anordnung (1000) nach Anspruch 4, **dadurch gekennzeichnet, dass** mindestens zwei Kammern (40) nicht parallele Richtungen (L) aufweisen.

6. Uhrmacher-Anordnung (1000) nach einem der Ansprüche 3 bis 5, **dadurch gekennzeichnet, dass** mindestens eine Raste (5) in ihrer Verriegelungsposition der ersten Komponente (1) und der zweiten Komponente (2) durch elastische Rückstellmittel (30) gehalten wird und dass der Demontagestand (500) so angeordnet ist, dass er auf die Raste (5) eine Zentrifugalkraft und/oder eine Druckänderung ausübt und auf sie eine Kraft ausübt, die ausreicht, um die Rückstellkraft der elastischen Rückstellmittel (30) zu überwinden und um das Verschieben der Raste (5) in ihrer Kammer (40) zur Entriegelung sicherzustellen.

7. Uhrmacher-Anordnung (1000) nach einem der Ansprüche 3 bis 6, **dadurch gekennzeichnet, dass** mindestens eine Raste (5) in ihrer Verriegelungsposition der ersten Komponente (1) und der zweiten Komponente (2) durch magnetische Anziehungs- oder Abstoßungsmittel (60) gehalten wird und dass der Demontagestand (500) magnetische Mittel (540) umfasst und so angeordnet ist, dass er die Raste (5) dann, wenn eine Zentrifugalkraft oder eine Druckänderung durch den Demontagestand (500) für deren Entriegelung ausgeübt wird, durch die magnetischen Mittel (540) mit einem Magnetfeld beaufschlagt, das den magnetischen Anziehungs- oder Abstoßungsmitteln (60) entgegenwirkt.

8. Uhrmacher-Anordnung (1000) nach einem der Ansprüche 3 bis 7, **dadurch gekennzeichnet, dass** die ersten Indexierungsmittel (51) und/oder die zweiten Indexierungsmittel (52) nicht magnetisch sind.

9. Uhrmacher-Anordnung (1000) nach einem der Ansprüche 3 bis 8, **dadurch gekennzeichnet, dass** die ersten Indexierungsmittel (51) und/oder die zweiten Indexierungsmittel (52) elektrostatisch leitfähig sind.

10. Uhrmacher-Anordnung (1000) nach einem der Ansprüche 3 bis 9, **dadurch gekennzeichnet, dass** die erste Fläche (11) und die zweite Fläche (12) Eingriffsflächen sind, die dazu angeordnet sind, in einer Bajonettverbindung miteinander zusammenzuwirken.

11. Uhrmacher-Anordnung (1000) nach einem der Ansprüche 3 bis 10, **dadurch gekennzeichnet, dass** die tragbare Uhr (100) mindestens ein Fenster (101) aufweist, das so angeordnet ist, dass es die Position einer Raste (5) in ihrer zusammengefügten und verriegelten Position der ersten Komponente (1) und der zweiten Komponente (2) visualisiert.

12. Uhrmacher-Anordnung (1000) nach Anspruch 11, **dadurch gekennzeichnet, dass** die tragbare Uhr (100) mindestens ein Fenster (101) aufweist, das so angeordnet ist, dass es die Position jeder Raste (5) in der zusammengefügten und verriegelten Position der ersten Komponente (1) und der zweiten Komponente (2) visualisiert.

13. Uhrmacher-Anordnung (1000) nach einem der Ansprüche 3 bis 12, **dadurch gekennzeichnet, dass** die erste Komponente (1) und die zweite Komponente (2) dazu angeordnet sind, bei ihrer Verbindung miteinander verschraubt zu werden, und dass mindestens eine Raste (5) in ihrer Kammer lediglich translatorisch frei ist und auf einer ersten Seite eine schräge oder gekrümmte Neigung, die dazu angeordnet ist, die Freigabe der Raste (5) durch Verschieben beim Verschrauben zuzulassen, und auf einer zweiten Seite eine Stirnseite aufweist, die dazu angeordnet ist, den Durchgang der Raste (5) beim Losschrauben zu verhindern, wenn die Raste (5) sowohl mit den ersten Indexierungsmitteln (51) als auch mit den zweiten Indexierungsmitteln (52) zusammenwirkt.

14. Uhrmacher-Anordnung (1000) nach einem der Ansprüche 3 bis 13, **dadurch gekennzeichnet, dass** die tragbare Uhr (100) einen Einlass (102) zum Einbringen oder Ausbringen eines Fluids durch einen Kanal (410) in jede bzw. aus jeder Kammer (40), die die tragbare Uhr (100) aufweist, umfasst.

15. Uhrmacher-Anordnung (1000) nach Anspruch 14, **dadurch gekennzeichnet, dass** die tragbare Uhr (100) mindestens ein Heliumventil umfasst, um das Fluid bei einem Überdruck oberhalb eines Sicherheitswerts abzuführen.

## Claims

1. Disassembly bench (500) for unlocking and disassembling a first component (1) and a second component (2) of a watch (100) with secure closing comprising at least two slides (5) for immobilising said first component (1) and said second component (2) in a locked position, said disassembly bench (500) comprising handling means (530) arranged to transmit a relative disassembly movement between said first component (1) and said second component (2), **characterised in that** said disassembly bench (500) comprises centrifuging means (510) and/or pneumatic or hydraulic means (520) for simultaneous application to all said slides (5) of a centrifugal force and/or an overpressure or an underpressure to such a watch (100) to press all said slides (5) into a position of free passage, wherein the action of said handling means (530) is only possible when all said slides (5) are in said position of free passage.

2. Disassembly bench (500) according to claim 1, **characterised in that** said disassembly bench (500) comprises magnetic means (540) arranged to apply to one or more of said slides (5) a magnetic field against magnetic attraction or repulsion means belonging to said watch (100) to repel or attract said slides (5).

3. Horological assembly (1000) comprising a disassembly bench (500) according to claim 1 or 2 and at least one watch (100) with secure closing, which has a first component (1) and a second component (2), which are arranged to be fitted together in a complementary manner respectively through a first surface (11) and a second surface (12), and indexed in assembly position by at least two pairs (50) comprising first indexing means (51) at the level of said first component (1) and second indexing means (52) at the level of said second component (2) that are complementary to one another or to such a said slide (5) within each said pair (50), and said first indexing means (51) and second indexing means (52) of each said pair (50) are aligned two by two in said assembly position to define a chamber (40), in which a said slide (5) is movable between a said position of free passage and a locking position, in which said slide (5) is arranged to lock said first component (1) and said second component (2) in an assembled and locked position, **characterised in that** in said assembled and locked position of said first component (1) and second component (2) and in at least one said pair (50) said first indexing means (51) and said second indexing means (52) and said slide (5) are inaccessible to any tool, **in that** said centrifuging means (510) and/or pneumatic or hydraulic means (520) are arranged for simultaneous application of a centrifugal force and/or an overpressure or an underpressure to each said chamber (40), and **in that** only the simultaneous application to each said pair (50) belonging to said watch (100) of a centrifugal force by said centrifuging means (510) and/or a pressure variation by said pneumatic or hydraulic means (520) actuates a release movement of each said slide (5) in each said pair (50) belonging to said watch (100) to allow the unlocking of said first component (1) and second component (2) and to permit a relative movement between said first component (1) and said second component (2) under the action of said handling means (530).

4. Horological assembly (1000) according to claim 3, **characterised in that** said watch (100) comprises a plurality of said chambers (40), in each of which said slide (5) is movable in a curvilinear or linear direction (L), in which said chamber (40) extends.

5. Horological assembly (1000) according to claim 4, **characterised in that** at least two of said chambers (40) have non-parallel directions (L).

6. Horological assembly (1000) according to one of claims 3 to 5, **characterised in that** at least one said slide (5) is held in its position of locking said first component (1) and said second component (2) by elastic restoring means (30), and **in that** said disassembly bench (500) is arranged to apply a centrifugal force and/or a pressure variation to said slide (5) and apply a sufficient force thereto to overcome the restoring force of said elastic restoring means (30) and to ensure the displacement of said slide (5) in its chamber (40) for unlocking.

7. Horological assembly (1000) according to one of claims 3 to 6, **characterised in that** at least one said slide (5) is held in its position of locking said first component (1) and said second component (2) by magnetic attraction or repulsion means (60), and **in that** said disassembly bench (500) comprises magnetic means (540) and is arranged to apply to said slide (5) during said application of a centrifugal force or a pressure variation by said disassembly bench (500) for unlocking, the application of a magnetic field by these magnetic means (540) against said magnetic attraction or repulsion means (60).

8. Horological assembly (1000) according to one of claims 3 to 7, **characterised in that** said first indexing means (51) and/or second indexing means (52) are nonmagnetic.

9. Horological assembly (1000) according to one of claims 3 to 8, **characterised in that** said first indexing means (51) and/or second indexing means (52) are electrostatic conductors.

10. Horological assembly (1000) according to one of claims 3 to 9, **characterised in that** said first surface (11) and second surface (12) are contact surfaces arranged to cooperate with one another in a bayonet type assembly.

11. Horological assembly (1000) according to one of claims 3 to 10, **characterised in that** said watch (100) comprises at least one aperture (101) arranged to display the position of one said slide (5) in said assembled and locked position of said first component (1) and second component (2).

12. Horological assembly (1000) according to claim 11, **characterised in that** said watch (100) comprises at least one aperture (101) arranged to display the position of each said slide (5) in said assembled and locked position of said first component (1) and second component (2).

13. Horological assembly (1000) according to one of claims 3 to 12, **characterised in that** said first component (1) and second component (2) are arranged to be screwed to one another during their assembly, and **in that** at least one said slide (5) is freely movable only in translation in its said chamber and on a first side has an oblique or curved slope arranged to allow said slide (5) to be slid over during screwing, and on a second side has a steep edge arranged to prevent passage of said slide (5) during unscrewing when said slide (5) cooperates simultaneously with said first indexing means (51) and said second indexing means (52).

14. Horological assembly (1000) according to one of claims 3 to 13, **characterised in that** said watch (100) comprises an inlet (102) for insertion or extraction of a fluid through a channel (410) in or outside each said chamber (40) belonging to said watch (100).

15. Horological assembly (1000) according to claim 14, **characterised in that** said watch (100) comprises at least one helium release valve for evacuation of said fluid in the case of an overpressure above a safe value.
